# EUROPÄISCHE PATENTSCHRIFT

(11) **EP 2 928 807 B1**
(45) Veröffentlichungstag und Bekanntmachung des Hinweises auf die Patenterteilung: **20.09.2017**
(21) Anmeldenummer: 13799523.9
(22) Anmeldetag: 02.12.2013
(51) Int. Cl.: B66B 23/02, B65G 23/00, B65G 21/22

(54) **FÖRDERKETTENRAD BEZIEHUNGSWEISE UMLENKKETTENRAD MIT ERHÖHTER LEBENSDAUER**
CONVEYOR CHAIN WHEEL AND DEFLECTION CHAIN WHEEL WITH IMPROVED LIFESPAN
ROUE DE CHAÎNE DE TRANSPORT OU ROUE D'ENTRAÎNEMENT DE DÉVIATION AVEC DURÉE DE VIE AUGMENTÉE

(30) Priorität: 07.12.2012 EP 12195985
(43) Veröffentlichungstag der Anmeldung: 14.10.2015
(73) Patentinhaber: Inventio AG, 6052 Hergiswil (CH)
(72) Erfinder: MAKOVEC, Christoph, A-2700 Wiener Neustadt (AT); MATHEISL, Michael, A-2331 Vösendorf (AT); SCHULZ,Robert, A-1100 Wien (AT); ILLEDITS, Thomas, A-2491 Neufeld (AT); HAUER, Uwe, 31582 Nienburg (DE)
(86) Internationale Anmeldenummer: PCT/EP2013/075245
(87) Internationale Veröffentlichungsnummer: WO 2014/086716

(56) Entgegenhaltungen:
- GB-A- 696 624
- US-A- 5 306 212
- US-A1- 2008 017 475

## Beschreibung

Die Erfindung betrifft eine Fahrtreppe mit einem Stufenband oder einen Fahrsteig mit einem Palettenband. Das Stufenband oder Palettenband beinhaltet mindestens eine Gelenkkette, an welcher Stufen beziehungsweise Paletten angeordnet sind.

Fahrtreppen und Fahrsteige sind hohen, wechselnden Belastungen durch stark schwankende Benutzerzahlen ausgesetzt und weisen lange Betriebszeiten von 10 bis 18 Stunden pro Tag auf. In Gebäuden des öffentlichen Verkehrs wie beispielsweise auf Flughäfen, in Bahnhöfen oder U-Bahnstationen können Fahrtreppen und Fahrsteige gar rund um die Uhr im Dauereinsatz stehen. Dementsprechend sind die bewegten Teile dieser Transporteinrichtungen hohem Verschleiss unterworfen und müssen daher intensiv und gründlich gewartet werden. Zu den Teilen mit starker Abnutzung (Verschleißteile) die periodisch zu ersetzen sind, gehören insbesondere das Palettenband oder das Stufenband sowie die Förderkettenräder und Umlenkkettenräder. Ein Förderkettenrad treibt die Gelenkkette an, ein Umlenkkettenrad dient der Umlenkung der Gelenkkettenstränge je nach Laufrichtung des Stufenbandes oder Palettenbandes von einem Vorlauf in einen Rücklauf beziehungsweise vom Rücklauf in den Vorlauf. Neuerdings weist die Gelenkkette recht lange Kettenlaschen auf, so dass die Anzahl der verschleißunterworfenen Gelenkstellen auf ein notwendiges Minimum reduziert werden kann. Vorzugsweise entspricht der Gelenkstellenabstand zwischen zwei Gelenkstellen der Palettentiefe beziehungsweise der Stufentiefe. Jede zusätzliche Gelenkstelle bedeutet auch höhere Fertigungskosten der Gelenkkette beziehungsweise Förderkette und erfordert eine höhere Anzahl Verbindungselemente wie beispielsweise Kettenbolzen oder Mitnehmerachsen und Führungselemente wie beispielsweise Kettenrollen.

Während das Palettenband oder Stufenband recht einfach ausgewechselt werden kann, erfordert das Auswechseln der Förderkettenräder und Umlenkkettenräder einen sehr hohen Arbeitsaufwand der zur langen Stilllegung der betreffenden Transporteinrichtung führt.

In den letzten Jahren wurden vermehrt flachbauende Fahrtreppen und Fahrsteige entwickelt. Diese weisen für den Kunden viele bautechnische Vorteile auf. Beispielsweise kann bei Fahrsteigen mit geringen Bauhöhen auf eine Grube im Boden verzichtet werden. Fahrtreppen mit geringeren Bauhöhen können einfacher in bestehende Gebäude eingebaut werden, da der zur Verfügung stehende Einbauraum der entfernten, alten Fahrtreppe meistens ausreichend ist. Gegebenenfalls kann das Tragwerk der zu ersetzenden Fahrtreppe belassen und die neue Fahrtreppe in das alte Tragwerk beziehungsweise Fachwerk eingefügt werden.

Um eine flachbauende Fahrtreppe oder einen flachbauenden Fahrsteig zu konstruieren, muss insbesondere der Durchmesser des Förderkettenrades und des Umlenkkettenrades reduziert werden. Dies führt zu einer grossen Auslenkung der Kettenglieder beziehungsweise Kettenlaschen der Gelenkkette im Bereich des Umlenkkettenrades beziehungsweise Förderkettenrades. Ferner nimmt bei gleicher Teilung aber mit abnehmendem Teilkreisdurchmesser des Kettenrades und damit mit abnehmender Zähnezahl der sogenannte Polygoneffekt, eine ungleichförmige Bewegung des Stufenbandes oder Palettenbandes, zu. Verschiedene Massnahmen zur Eliminierung des Polygoneffekts werden beispielsweise in der EP 1 876 135 B1 offenbart.

Diese Massnahmen ermöglichen die Verwendung von langen Kettenlaschen beziehungsweise Kettengliedern zusammen mit kleinen Umlenkkettenrädern und Förderkettenrädern, ohne dass ein Polygoneffekt auftritt oder dieser zumindest für den Benutzer kaum spürbar ist. Die langen Gelenkstellenabstände erhöhen aber zusätzlich den Auslenkungswinkel in den Gelenkstellen und es sind bei vorgegebenem Teilkreisdurchmesser am Umfang des Kettentrades weniger Zähne mit der Gelenkkette im Eingriff, wodurch die Flächenpressung an den Zahngründen und Zahnflanken des Umlenkkettenrades oder Förderkettenrades und damit deren Verschleiss wesentlich höher ist als bei Kettenrädern mit gleicher Teilung und größerem Teilkreisdurchmesser.

Eine Aufgabe der vorliegenden Erfindung ist daher, einen Fahrsteig beziehungsweise eine Fahrtreppe zu schaffen, deren Förderkettenrad und/oder Umlenkkettenrad eine wesentlich höhere Lebensdauer aufweist als die bekannten Kettenräder mit vergleichbaren Dimensionen.

Diese Aufgabe wird gelöst durch eine Fahrtreppe mit einem Stufenband oder einen Fahrsteig mit einem Palettenband, wobei das Stufenband oder Palettenband mindestens eine Gelenkkette aufweist, die aufeinanderfolgend in theoretisch gleichen Eingriffsabständen angeordnete Eingriffsstellen beinhaltet. Theoretisch deshalb, weil durch Fertigungstoleranzen und durch Verschleiss die Eingriffsabstände innerhalb eines zulässigen Bereichs stark variieren können. An der Gelenkkette sind Stufen beziehungsweise Paletten angeordnet. Die Fahrtreppe oder der Fahrsteig weist ferner einen ersten Umlenkbereich und einen zweiten Umlenkbereich mit mindestens einem Förderkettenrad auf, wobei das Förderkettenrad die Gelenkkette umlenkt und antreibt. Der erste Umlenkbereich kann entweder mindestens ein Umlenkkettenrad oder mindestens einen Umlenkbogen zur Umlenkung der Gelenkkette aufweisen. Die mindestens eine Gelenkkette ist zwischen den Umlenkbereichen umlaufend angeordnet, wobei die Eingriffsstellen in Zahnlücken des Förderkettenrades und gegebenenfalls in Zahnlücken mindestens eines im ersten Umlenkbereich angeordnetes Umlenkkettenrad eingreifen.

Um die Lebensdauer zu erhöhen, weisen das mindestens eine Förderkettenrad und/oder das mindestens eine Umlenkkettenrad einen Teilkreis mit einer auf die Zahnlücken bezogenen Teilung auf, die der Hälfte eines Eingriffsabstandes entspricht. Aufgrund der Beziehung, dass die Teilung des Förderkettenrades und/oder des Umlenkkettenrades der Hälfte des Eingriffsabstandes entspricht, wird im Umlenkbereich immer nur jede zweite Zahnlücke mit einer Eingriffsstelle belegt. Wie weiter unten ausführlicher beschrieben, lässt sich die Lebensdauer der Kettenräder dadurch nahezu verdoppeln.

Die Eingriffsstellen können sehr unterschiedlich ausgestaltet sein. Beispielsweise können die Gelenkstellen der mindestens einen Gelenkkette die Eingriffsstellen bilden.

An der mindestens einen Gelenkkette können auch Kettenrollen angeordnet sein, welche als Eingriffsstellen dienen. Die Kettenrollen weisen eine bestimmte Kettenrollenbreite auf, die mindestens einer Länge einer Berührungslinie zwischen dem Kettenrad und der Kettenrolle während des Eingriffs entspricht. Die Länge der Berührungslinie ist so gewählt, dass eine zulässige Flächenpressung des Kettenrollenmaterials beziehungsweise des Umlenk- und/oder Förderkettenradmaterials nicht überschritten wird. Vorzugsweise sind diese Kettenrollen an den Gelenkstellen der Gelenkkette angeordnet. Dabei muss aber nicht jede Gelenkstelle mit einer Kettenrolle versehen sein.

In einer ersten Ausführung der Erfindung werden die charakteristischen Eigenschaften der bei Fahrtreppen und Fahrsteigen eingesetzten Gelenkketten beziehungsweise Rollenketten beziehungsweise Förderketten ausgenutzt. Eine charakteristische Eigenschaft besteht darin, dass die Gelenkketten aufgrund der Paletten- oder Stufenlänge beziehungsweise Paletten- oder Stufentiefe im Vergleich zu handelsüblichen Rollenketten lange Kettenlaschen beziehungsweise Kettenglieder aufweisen. Statt Kettenräder mit sehr starken, auf die Länge der Kettenglieder abgestimmten Zähnen zu verwenden, sieht die vorliegende Erfindung die Verwendung von Kettenrädern mit der nahezu doppelten Anzahl Zähnen vor. Vorzugsweise weisen das mindestens eine Förderkettenrad und/oder Umlenkkettenrad eine ungerade Zähnezahl auf. Die ungerade Zähnezahl sorgt dafür, dass nach zwei Umdrehungen des Förderkettenrades beziehungsweise des Umlenkkettenrades alle Zahnlücken einmal belegt wurden. Da jede Zahnlücke in den Eingriff mit Eingriffsstellen gelangen kann, müssen die Eingriffsstellen der Gelenkkette nicht relativ zum Umlenkkettenrad und/oder Förderkettenrad versetzt werden. Selbstverständlich wäre auch eine gerade Zähnezahl möglich, dann müsste aber beim Erreichen der Hälfte der Lebensdauer des Förderkettenrades beziehungsweise des Umlenkkettenrades die Gelenkkette um eine Teilung des Förderkettenrades und/oder des Umlenkkettenrades verschoben werden, so dass während der zweiten Hälfte der Lebensdauer die bis anhin noch unbenutzten Zahnlücken belegt werden.

Die zweite Ausführung der Erfindung lehnt an die in der EP 1 876 135 B1 offenbarte Lehre an und eignet sich insbesondere für Fahrsteige und Fahrtreppen mit sehr niedriger Bauhöhe. Bei dieser Ausführung sind die als Eingriffsstellen dienenden Kettenrollen der mindestens einen Gelenkkette in erste Kettenrollen und zweite Kettenrollen aufgeteilt. Ferner sind die ersten Kettenrollen zu den zweiten Kettenrollen versetzt an der Gelenkkette angeordnet, so dass die ersten Kettenrollen und die zweiten Kettenrollen auf nebeneinanderliegenden Spuren abrollen. Das Förderkettenrad beziehungsweise das Umlenkkettenrad weist die Breite einer Spur auf und ist beispielsweise zur ersten Spur ausgerichtet. Durch die versetzte Anordnung der Kettenrollen sind lange Eingriffsabstände zwischen den Kettenrollen vorhanden, die in erfindungsgemäßer Weise die Anordnung weiterer Zahnlücken am Kettenrad ermöglichen, welche alle infolge der ungeraden Zähnezahl belegt werden können.

Wie in der EP 1 876 135 B1 vorgeschlagen, werden beispielsweise die ersten Kettenrollen über das Förderkettenrad und das Umlenkkettenrad geführt und die zweiten Kettenrollen über eine zum Förderkettenrad beziehungsweise Umlenkkettenrad ausgerichtete Umlenkkurve geführt. Um den sogenannten Polygoneffekt zu eliminieren, können im jeweiligen Umlenkbereich die Kettenrollen an einem Grundkreis des Förderkettenrades beziehungsweise des Umlenkkettenrades aufliegen, wobei der Grundkreisradius kleiner ist als der Radius der Umlenkkurve.

Anstelle der Umlenkkurve kann auch ein zweites Kettenrad verwendet werden. Dann werden die ersten Kettenrollen über ein erstes Förderkettenrad geführt und die zweiten Kettenrollen über ein zum ersten Förderkettenrad parallel angeordnetes und mit diesem drehstarr verbundenes zweites Förderkettenrad geführt. Im gegenüberliegenden Umlenkbereich werden die ersten Kettenrollen über ein erstes Umlenkkettenrad geführt und die zweiten Kettenrollen über ein zum ersten Umlenkkettenrad parallel angeordnetes und mit diesem drehstarr verbundenes zweites Umlenkkettenrad geführt, falls dort Umlenkräder vorgesehen sind. Sofern die Förderkettenräder beziehungsweise Umlenkkettenräder denselben Teilkreisdurchmesser aufweisen, bleibt der Polygoneffekt bestehen. Wenn aber das erste Förderkettenrad und das erste Umlenkkettenrad einen größeren Teilkreisdurchmesser aufweisen als das zweite Förderkettenrad und das zweite Umlenkkettenrad, dann kann der Lehre der EP 1 876 135 B1 gemäß, der Polygoneffekt zumindest deutlich reduziert werden.

Anstatt die Kettenrollen versetzt an der Gelenkkette anzuordnen, können diese abgestuft ausgebildet sein. Dies bedeutet, dass die Kettenrollen in der ersten Hälfte ihrer Kettenrollenbreite einen ersten Rollendurchmesser und in der zweiten Hälfte ihrer Kettenrollenbreite einen zum ersten Rollendurchmesser kleineren zweiten Rollendurchmesser aufweisen. Diese Kettenrollen können mit ihrer abgestuften Ausgestaltung alternierend zwischen Kettenlaschen der Gelenkkette angeordnet werden, so dass ein erster Teil der Kettenrollen und ein zweiter Teil der Kettenrollen mit ihren ersten Rollendurchmessern auf nebeneinanderliegenden Spuren beziehungsweise Bahnen abrollen.

Diese Gelenkketten mit abgestuft ausgestalteten Kettenrollen können ebenfalls in Fahrtreppen und Fahrsteigen eingesetzt werden, deren Förderkettenrad und Umlenkkettenrad einen Grundkreisradius aufweisen, wobei die Breite des Förderkettenrades und des Umlenkkettenrades der halben Kettenrollenbreite der abgestuften Kettenrollen entspricht. Das Förderkettenrad und das Umlenkkettenrad sind zu einer der beiden nebeneinanderliegenden Spuren ausgerichtet. Ferner ist jeweils eine zum Förderkettenrad beziehungsweise Umlenkkettenrad und der zweiten Spur ausgerichtete Umlenkkurve vorhanden, so dass in den Umlenkbereichen die ersten Rollendurchmesser alternierend am Grundkreisradius beziehungsweise an der Umlenkkurve anliegen. Die in Zahnlücken des Kettenrades hineinragenden abgestuften Kettenrollen liegen jedoch nie mit ihrem zweiten Rollendurchmesser am Grundkreisradius an und sind deshalb keine Eingriffsstellen im Sinne der Erfindung.

Auch bei den abgestuften Rollen können das Förderkettenrad und das Umlenkkettenrad einen Grundkreisradius aufweisen, der kleiner ist als der Radius der Umlenkkurve.

Eine weitere Ausführung einer Gelenkkette sieht wiederum abgestuft ausgestaltete Kettenrollen vor, die in der ersten Hälfte ihrer Kettenrollenbreite einen ersten Rollendurchmesser und in der zweiten Hälfte ihrer Kettenrollenbreite einen zum ersten Rollendurchmesser kleineren zweiten Rollendurchmesser aufweisen. Die Kettenrollen sind auch bei dieser Ausführung mit ihrer abgestuften Ausgestaltung alternierend zwischen Kettenlaschen der Gelenkkette angeordnet und sind dadurch in einen ersten Teil und in einen zweiten Teil von Kettenrollen unterteilt. Im Unterschied zur vorangehend beschriebenen Ausführung, rollen der erste Teil von Kettenrollen und der zweite Teil von Kettenrollen mit ihren ersten Rollendurchmessern auf einer gemeinsamen, mittleren Spur ab. Der erste Teil der Kettenrollen ist jedoch bezüglich ihres zweiten Durchmessers zu einer parallel zur mittleren Spur verlaufenden ersten Seitenspur ausgerichtet und der zweite Teil der Kettenrollen ist bezüglich ihres zweiten Durchmessers zu einer parallel zur mittleren Spur verlaufenden zweiten Seitenspur ausgerichtet.

Das Förderkettenrad und, sofern vorhanden, das Umlenkkettenrad dieser Ausführung weist einen Grundkreisradius auf und die Breite des Förderkettenrades und des Umlenkkettenrades entsprechen der halben Kettenrollenbreite der abgestuften Kettenrollen. Diese sind zu einer der beiden Seitenspuren ausgerichtet. Ferner ist jeweils eine zum Förderkettenrad beziehungsweise Umlenkkettenrad und der mittleren Spur ausgerichtete Umlenkkurve vorhanden, so dass in den Umlenkbereichen die ersten Rollendurchmesser an der Umlenkkurve anliegen und die zweiten Durchmesser einer Seitenspur am Grundkreisradius anliegen.

Eine Weiterbildung dieser Ausführung besteht darin, dass der erste Teil der Kettenrollen mit ihren zweiten Durchmessern über ein, zu einer der beiden Seitenspuren ausgerichtetes erstes Förderkettenrad und ein erstes Umlenkkettenrad geführt ist. Der zweite Teil der Kettenrollen ist mit ihren zweiten Durchmessern über ein zur zweiten Seitenspur ausgerichtetes und zum ersten Förderkettenrad parallel angeordnetes und mit diesem drehstarr verbundenes zweites Förderkettenrad sowie über ein zum ersten Umlenkkettenrad parallel angeordnetes und mit diesem drehstarr verbundenes zweites Umlenkkettenrad geführt. Ferner rollt im Umlenkbereich sowohl der erste Teil als auch der zweite Teil der Kettenrollen mit ihrem ersten Durchmesser über eine zwischen den Förderkettenrädern beziehungsweise Umlenkkettenrädern angeordnete Umlenkkurve ab. Diese Umlenkkurve kann streckenweise unterbrochen sein, so dass in diesem Umlenkstreckenabschnitt die Kettenrollen nur noch mit ihren zweiten Durchmessern mit den beiden Förderkettenrädern beziehungsweise den beiden Umlenkkettenrädern in Anlage sind.

In Anlehnung an die Lehre aus der EP 1 876 135 B1 kann das erste Förderkettenrad und das erste Umlenkkettenrad einen größeren Teilkreisdurchmesser aufweisen als das zweite Förderkettenrad und das zweite Umlenkkettenrad. Dabei dient die zwischen dem ersten Umlenkkettenrad beziehungsweise Förderkettenrad und dem zweiten Umlenkkettenrad beziehungsweise Förderkettenrad angeordnete Umlenkkurve lediglich zur Einführung der Kettenrollen in das erste und zweite Umlenkkettenrad beziehungsweise in das erste und zweite Förderkettenrad, um den Polygoneffekt vollständig zu eliminieren.

Die Fahrtreppe oder der Fahrsteig mit mindestens einem Förderkettenrad und/oder Umlenkkettenrad mit erhöhter Lebensdauer wird im Folgenden anhand von Ausführungsbeispielen und mit Bezugnahme auf die Zeichnungen näher erläutert. Darin zeigen:
- Figur 1:: in der Seitenansicht in schematischer Darstellung eine Fahrtreppe, welche ein umlaufendes Stufenband aufweist das zwischen einem ersten Umlenkbereich und einem zweiten Umlenkbereich angeordnet ist;
- Figur 2:: in der Seitenansicht in schematischer Darstellung ein Förderkettenrad des in Figur 1 dargestellten zweiten Umlenkbereichs sowie ein Teil einer Gelenkkette des Stufenbandes;
- Figur 3:: in dreidimensionaler Ansicht ein Umlenkbereich eines Fahrsteiges mit einem Förderkettenrad, einer Umlenkkurve und mit einer Gelenkkette in einer ersten Ausführung, die abgestufte Kettenrollen aufweist;
- Figur 4:: in dreidimensionaler Ansicht ein Umlenkbereich eines Fahrsteiges mit einem Förderkettenrad, mit einer Umlenkkurve und mit einer Gelenkkette in einer zweiten Ausführung, die abgestufte Kettenrollen aufweist;
- Figur 5:: in dreidimensionaler Ansicht ein Umlenkbereich eines Fahrsteiges mit zwei gleichlaufenden Förderkettenrädern, mit einer Umlenkkurve und mit einer Gelenkkette die abgestufte Kettenrollen in einer zweiten Ausführung aufweist;
- Figur 6:: in dreidimensionaler Ansicht ein Umlenkbereich eines Fahrsteiges mit einer Gelenkkette, die alternierend zueinander versetzt angeordnete Kettenrollen aufweist.

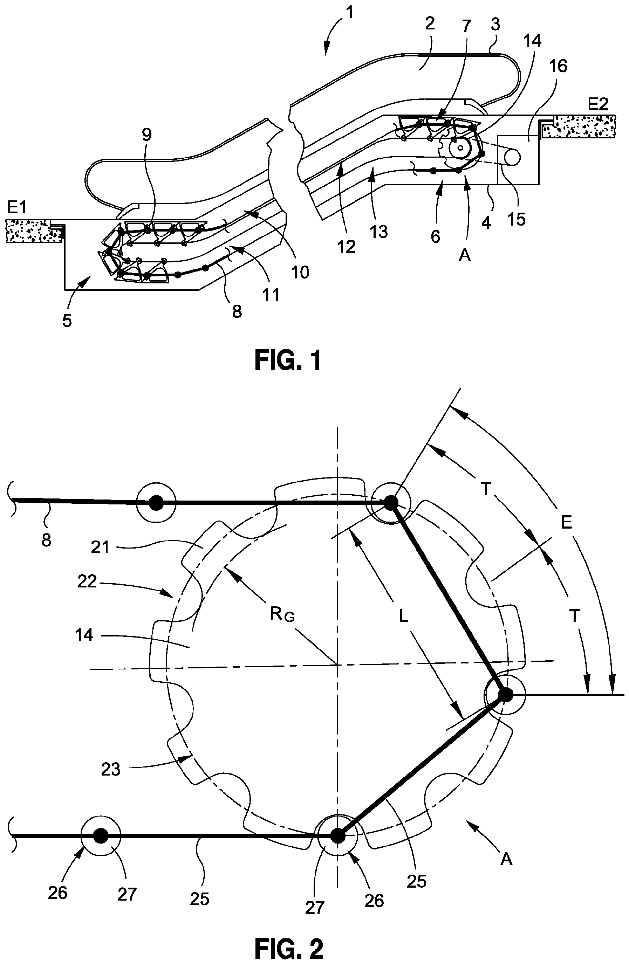

Figur 1 zeigt schematisch in der Seitenansicht eine Fahrtreppe 1 mit einer Balustrade 2 und mit einem die Balustrade 2 umlaufenden Handlauf 3. Die Fahrtreppe 1 verbindet ein unteres Stockwerk E1 mit einem oberen Stockwerk E2, wobei ein als Fachwerk ausgestaltetes Tragwerk 4 als Träger für die Balustrade 2 und als Einbaurahmen für weitere Komponenten der Fahrtreppe 1 dient. Das Tragwerk 4 weist ferner einen ersten Umlenkbereich 5 und einen zweiten Umlenkbereich 6 auf. Zwischen dem ersten Umlenkbereich 5 und dem zweiten Umlenkbereich 6 ist ein Stufenband 7 umlaufend im Tragwerk 4 angeordnet. Das Stufenband 7 weist mindestens eine, in der Figur 1 nur teilweise dargestellte Gelenkkette 8 auf, an welcher Stufen 9 angeordnet sind. Das Stufenband 7 weist einen Vorlauf 10 auf, mittels dem Personen und Gegenstände transportiert werden und einen Rücklauf 11 auf, der der Rückführung der Stufen 9 dient. Die Stufen 9 und die Gelenkkette 8 werden im Vorlauf 10 mittels Laufschienen 12 und im Rücklauf 11 mittels Laufschienen 13 geführt.

Zur Umlenkung des Stufenbandes 7 ist im ersten Umlenkbereich 5 mindestens ein Umlenkkettenrad oder eine Umlenkführung angeordnet, welche hier aus Gründen der Übersicht nur andeutungsweise dargestellt ist. Im zweiten Umlenkbereich 6 ist ein Förderkettenrad 14 angeordnet, welches mittels eines Antriebsstranges 15 mit einem Antriebsmotor 16 verbunden ist. Das Förderkettenrad 14 greift in die Gelenkkette 8 ein und überträgt dadurch formschlüssig die Drehbewegung des Antriebsmotors 16 auf die Gelenkkette 8 und damit auf das Stufenband 7.

In Figur 2 ist die Detailansicht A der Figur 1 grösser dargestellt und zeigt das Grundprinzip der Erfindung. Das Förderkettenrad 14 weist eine ungerade Anzahl Zähne 21 und Zahnlücken 22 auf. Diese sind bezogen auf einen Teilkreisdurchmesser 23 mit gleicher Teilung T am Umfang des Förderkettenrades 14 angeordnet.

Die Gelenkkette 8 ist der besseren Übersicht wegen schematisch dargestellt und beinhaltet Kettenlaschen 25, Gelenkstellen 26 und im Bereich der Gelenkstellen 26 angeordnete Eingriffsstellen 27. Diese Eingriffsstellen 27 können Kettenrollen, Kettenbolzen, Kettenhülsen Gleitelemente wie Kufen oder Gleitsteine und dergleichen mehr sein. Im dargestellten Ausführungsbeispiel liegen die Eingriffsstellen 27 in den Zahnlücken 22 an einem Grundkreisradius R_{G} an, wobei die zur Bildebene orthogonal angeordneten Schwenkachsen der Gelenkstellen 26 auf dem Teilkreisdurchmesser 23 liegen.

Die Eingriffsstellen 27 könnten beispielsweise auch in der Mitte zwischen zwei Gelenkstellen 26 an der Kettenlasche 25 angeordnet sein. Die Eingriffsstellen 27 sind aufeinanderfolgend in theoretisch gleichen Eingriffsabständen E an der Gelenkkette 8 angeordnet oder ausgebildet. Wie in der Figur 2 deutlich dargestellt, ist dieser Eingriffsabstand E nicht die Länge L einer Kettenlasche 25, sondern das Bogenmaß am Teilkreisdurchmesser 23 des Förderkettenrades 14 und entspricht der doppelten Teilung T am Teilkreisdurchmesser 23. Im vorliegenden Beispiel korrespondiert aber die Länge L der Kettenlasche 25 mit dem Eingriffsabstand E dahingehend, dass die Länge L der Kettenlasche 25 der Kreissehne eines Teilkreisabschnitts des Förderkettenrades 14 entspricht, welcher Teilkreisabschnitt durch den Eingriffsabstand E definiert ist.

Wenn sich nun das Förderkettenrad 14 dreht, gelangt im durch die Gelenkkette 8 umschlungenen Bereich des Förderkettenrades 14 immer nur jede zweite Zahnlücke 22 in Anlage beziehungsweise in Wirkverbindung mit einander nachfolgenden Eingriffsstellen 27. Aufgrund der ungeraden Zähnezahl gelangen aber während zweier Umdrehungen des Förderkettenrades 14 alle Zahnlücken 22 in Anlage mit Eingriffsstellen 27. Dieselben Ausführungen gelten selbstverständlich auch für ein Umlenkkettenrad.

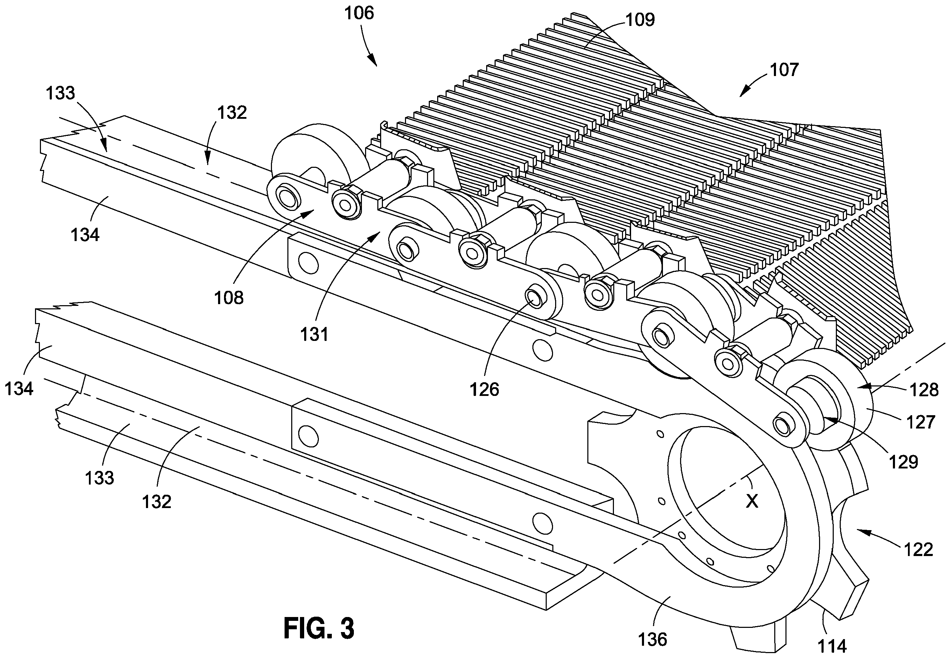

Figur 3 zeigt in dreidimensionaler Ansicht einen Umlenkbereich 106 eines nicht weiter dargestellten Fahrsteiges mit einem Palettenband 107. Das Palettenband 107 ist im Wesentlichen gleich aufgebaut wie ein Stufenband, wobei anstelle von Stufen eine Vielzahl Paletten 109 an mindestens einer Gelenkkette 108 angeordnet sind. Die Gelenkkette 108 weist eine Vielzahl von Kettenlaschen 131 auf, die durch Gelenkstellen 126 miteinander verbunden sind. An jeder Gelenkstelle 126 ist eine Kettenrolle 127 zwischen den Kettenlaschen 131 angeordnet, wobei wie nachfolgend beschrieben, jede zweite Kettenrolle 127 als Eingriffsstelle 127 dient. Die Kettenrollen 127 der mindestens einen Gelenkkette 108 sind abgestuft ausgebildet. Sie weisen deshalb in der ersten Hälfte ihrer Kettenrollenbreite einen ersten Rollendurchmesser 128 und in der zweiten Hälfte ihrer Kettenrollenbreite einen zum ersten Rollendurchmesser 128 kleineren zweiten Rollendurchmesser 129 auf. Die Kettenrollen 127 sind mit ihrer abgestuften Ausgestaltung alternierend zwischen den Kettenlaschen 131 angeordnet, so dass ein erster Teil der Kettenrollen 127 mit ihren ersten Rollendurchmessern 128 auf einer ersten Spur 132 einer Schiene 134 und ein zweiter Teil der Kettenrollen 127 mit ihren ersten Rollendurchmessern 128 auf einer zweiten Spur 133 der Schiene 134 abrollen.

Im Umlenkbereich 106 ist ein Förderkettenrad 114 um eine Drehachse X drehbar angeordnet, wobei der besseren Übersicht wegen auf die Darstellung der Welle und der Lagerstellen verzichtet wurde. Das Förderkettenrad 114 ist zur ersten Spur 132 ausgerichtet und weist nahezu deren Spurbreite auf. Neben dem Förderkettenrad 114 und zur zweiten Spur 133 ausgerichtet ist eine Umlenkkurve 136 an der Schiene 134 befestigt. Der Kurvenmittelpunkt der Umlenkkurve 136 ist präzise zur Drehachse X des Förderkettenrades 114 ausgerichtet. Obwohl die Teilung des Kettenrades 114 den Abständen der Gelenkstellen 126 entspricht, greifen aufgrund ihrer abgestuften Rollendurchmesser 128, 129 und der alternierenden Anordnung nur die ersten Kettenrollen 127 als Eingriffsstellen 127 dienend mit ihrem ersten Rollendurchmesser 128 in einer Zahnlücke 122 des Förderkettenrades 114 ein. Die zweiten Kettenrollen 127 rollen mit ihren ersten Rollendurchmessern 128 über die Umlenkkurve 136, wodurch deren zweite Rollendurchmesser 129 im ganzen Umlenkbereich vom Kettenrad 114 beabstandet bleiben. Aus diesen Ausführungen geht somit hervor, dass nur die ersten Kettenrollen 127 Eingriffsstellen 127 im Sinne der Erfindung sind. Die in der Figur 3 offenbarte Lehre gilt selbstverständlich auch für ein nicht dargestelltes Umlenkkettenrad.

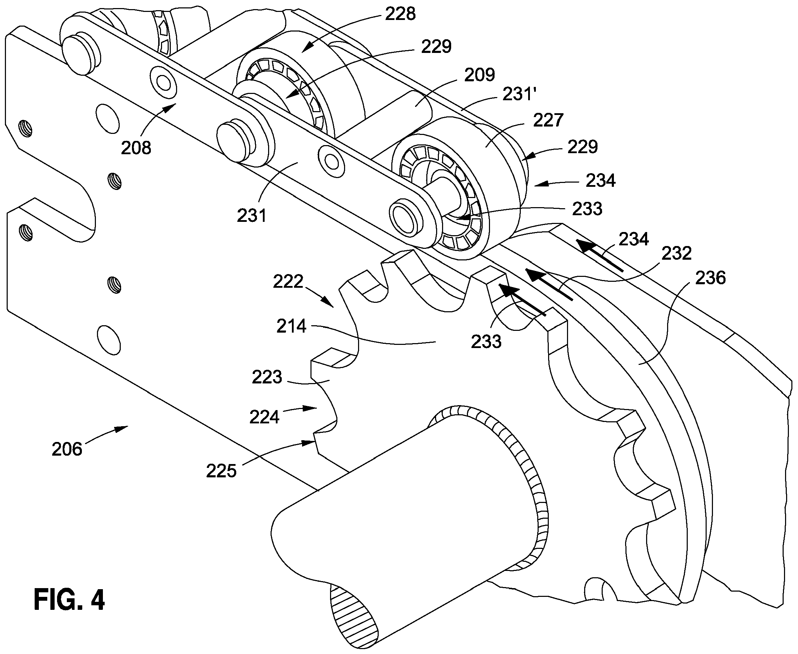

Der Rollenkörper der Kettenrolle 127 kann aus mehreren Werkstoffen gefertigt sein, so dass beispielsweise eine erste Hälfte mit dem ersten Rollendurchmesser 128 aus Kunststoff und die zweite Hälfte mit dem kleinen Rollendurchmesser 129 aus Metall, beispielsweise Stahl gefertigt sind. Selbstverständlich sind auch weitere Materialien wie Aluminium, Bronze, glasfaserverstärkte aramidfaserverstärkte und kohlefaserverstärkte Kunststoffe zur Herstellung von Rollenkörpern verwendbar und können ihren Eigenschaften entsprechend miteinander kombiniert werden. Ferner können anstelle eines abgestuften Rollenkörpers auch zwei nebeneinander angeordnete Rollenkörper unterschiedlichen Rollendurchmessers 128, 129 verwendet werden. Die beiden nebeneinander angeordneten Rollenkörper müssen nicht einmal drehstarr miteinander verbunden sein. Selbstverständlich können auch die Kettenrollen der nachfolgend beschriebenen Figur 4 entsprechend ausgebildet sein.

Eine weitere Möglichkeit, abgestufte Kettenrollen 227 an einer Gelenkkette 208 anzuordnen zeigt der in Figur 4 dargestellte Umlenkbereich 206. Die vorangehend in Zusammenhang mit der Figur 3 beschriebenen abgestuften Kettenrollen 227 können auch derart angeordnet werden, dass deren erste Rollendurchmesser 228 auf einer mittleren Spur 232 angeordnet sind und diese mittlere Spur 232 zu einer Umlenkkurve 236 ausgerichtet ist, so dass alle Kettenrollen 227 mit ihrem größeren Rollendurchmesser 228 über die Umlenkkurve 236 abrollen. Die zweiten Hälften der Kettenrollen 227 mit kleineren Rollendurchmessern 229 sind alternierend zu einer Seite und zur anderen Seite der ersten Rollendurchmesser 228 angeordnet.

Durch die alternierende Anordnung sind gewissermaßen drei Spuren 232, 233, 234 vorhanden, nämlich die mittlere Spur 232, eine erste Seitenspur 233 und eine zweite Seitenspur 234. Seitlich der Umlenkkurve 236 ist ein Förderkettenrad 214 angeordnet und zu einer der beiden, parallel zur mittleren Spur 232 verlaufenden Seitenspuren 233, 234 ausgerichtet. Somit gelangt nur jede zweite Kettenrolle 227 mit ihrer zweiten Hälfte, welche einen kleinen Rollendurchmesser 229 aufweist, in Eingriff mit dem Förderkettenrad 214. Nur diese Kettenrollen 227 dienen als Eingriffsstelle 227. Da das Förderkettenrad 214 eine Teilung aufweist, die einem Gelenkabstand beziehungsweise der Kettenteilung der Gelenkkette 208 entspricht, bleibt am umschlungenen Umfang des Förderkettenrades 214 jede zweite Zahnlücke 222 unbesetzt. Durch die ungerade Zähnezahl gelangt binnen zweier Umdrehungen jede Zahnlücke 222 einmal in Eingriff beziehungsweise in Wirkverbindung mit einer Eingriffsstelle 227 der Gelenkkette 208.

Es ist noch anzumerken, dass das Förderkettenrad 214 mehrere Zähne 223 aufweist, die jeweils eine Ausnehmung 224 an ihrem Zahnkopf 225 aufweisen. Diese Ausnehmungen 224 sind Freistellungen für Verbindungsbolzen 209 der Gelenkkette 208. Diese Verbindungsbolzen 209 verbinden Kettenlaschen 231, 231' der Gelenkkette 208 paarweise miteinander, so dass diese stabile Kettenglieder bilden.

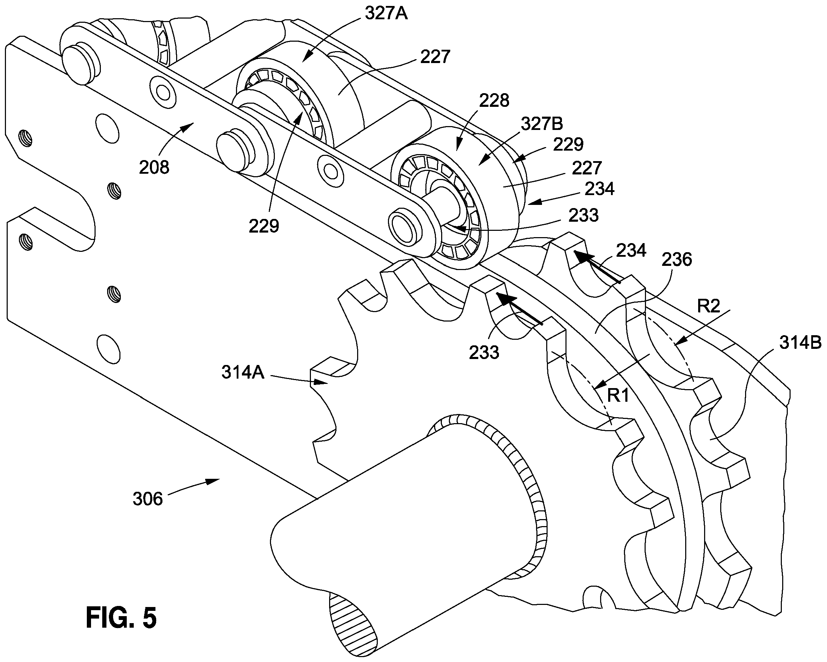

Figur 5 zeigt eine weitere Ausführung eines Umlenkbereichs 306, wobei die meisten Bauteile dieselben sind wie in der Figur 4. Deshalb weisen gleiche Bauteile dieselben Bezugszeichen auf und auf eine erneute Beschreibung dieser Bauteile wird verzichtet. Wie schon in der Figur 4 gezeigt, sind die Kettenrollen 227 bezüglich ihrer abgestuften Form alternierend an der Gelenkkette 208 angeordnet, wodurch ein erster Teil 327A von Kettenrollen 227 und ein zweiter Teil 327B von Kettenrollen 227 vorhanden ist, welche als Eingriffsstellen dienen. Der Unterschied zum Ausführungsbeispiel der Figur 4 besteht darin, dass der erste Teil 327A der Kettenrollen 227 mit ihren zweiten Durchmessern 229 über ein, zu einer ersten Seitenspur 233 ausgerichtetes erstes Förderkettenrad 314A beziehungsweise erstes Umlenkkettenrad geführt sind und der zweite Teil der Kettenrollen 327B mit ihren zweiten Durchmessern 229 über ein zur zweiten Seitenspur 234 ausgerichtetes und zum ersten Förderkettenrad 314A parallel angeordnetes und mit diesem drehstarr verbundenes zweites Förderkettenrad 314B geführt sind, wobei die Kettenrollen 227 mit ihrem ersten Durchmesser 228 über eine zwischen den Förderkettenrädern 314A, 314B angeordnete Umlenkkurve 236 abrollen.

In Anlehnung an die Lehre aus der EP 1 876 135 B1 kann das erste Förderkettenrad 314A einen ersten Teilkreisdurchmesser R1 aufweisen der grösser ist, als ein zweiter Teilkreisdurchmesser R2 des zweiten Förderkettenrades 314B. Um den Polygoneffekt vollständig zu eliminieren, dient die zwischen dem ersten Förderkettenrad 314A und dem zweiten Förderkettenrad 314B angeordnete Umlenkkurve 236 lediglich zur Einführung beziehungsweise Übergabe der Kettenrollen 227 in das erste und zweite Förderkettenrad 314A, 314B.

Selbstverständlich gelten alle vorangehenden Ausführungen zu den beiden Förderkettenrädern 314A, 314B sinngemäß auch für ein erstes Umlenkkettenrad beziehungsweise ein zum ersten Umlenkkettenrad parallel angeordnetes und mit diesem drehstarr verbundenes zweites Umlenkkettenrad.

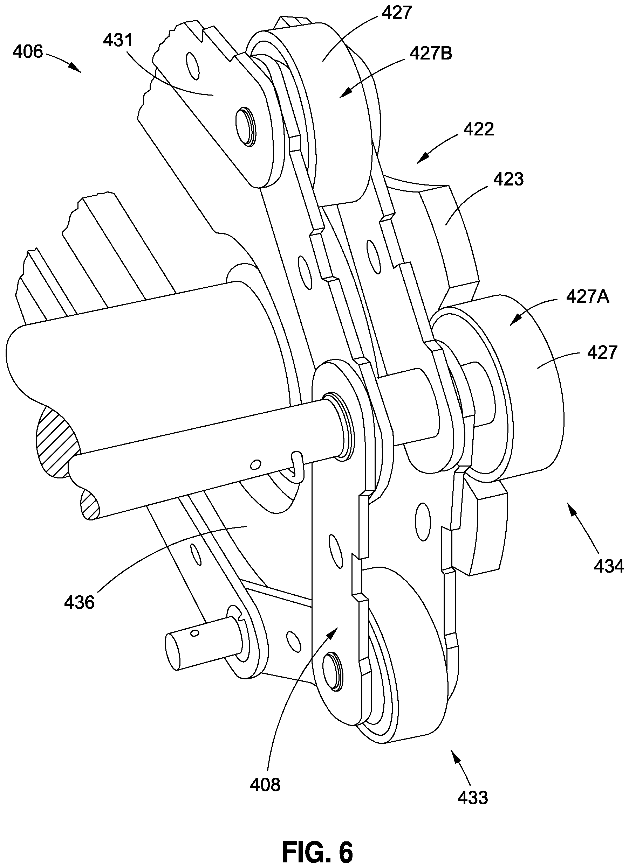

Figur 6 zeigt eine weitere Ausführung eines Umlenkbereichs 406 in dreidimensionaler Ansicht mit einem Förderkettenrad 423, einer Umlenkkurve 436 und einer Gelenkkette 408 mit in den Gelenkstellen angeordneten Kettenrollen 427. Die Kettenrollen 427 sind in erste Kettenrollen 427A und in zweite Kettenrollen 427B aufgeteilt. Die zweiten Kettenrollen 427B sind zwischen den Kettenlaschen 431 der Gelenkkette 408 angeordnet. Die ersten Kettenrollen 427A sind an einer Seite der Gelenkkette 408 und zu den zweiten Kettenrollen 427B versetzt angeordnet, so dass die ersten Kettenrollen 427A auf einer ersten Spur 434 und die zweiten Kettenrollen 427B auf einer parallel zur ersten Spur 434 verlaufenden zweiten Spur 433 abrollen. Die Umlenkkurve 436 ist zur zweiten Spur 433 und das Förderkettenrad 423 zur ersten Spur 434 ausgerichtet, so dass im Umlenkbereich 406 die zweiten Kettenrollen 427B auf der Umlenkkurve 436 abrollen. Nur die ersten Kettenrollen 427A dienen als Eingriffsstellen 427 und greifen im Umlenkbereich 406 in Zahnlücken 422 des Förderkettenrades 423 ein. Es ist in Verbindung mit dem Ausführungsbeispiel der Figur 5 offensichtlich, dass auch das in der Figur 6 dargestellte Ausführungsbeispiel zwei parallel zueinander angeordnete und miteinander drehstarr verbundene Kettenräder anstelle eines Kettenrades und einer Umlenkkurve aufweisen kann. Selbstverständlich gelten alle vorangehenden Ausführungen zum Förderkettenrad 423 sinngemäß auch für ein Umlenkkettenrad.

Obwohl in der Beschreibung vor allem Kettenrollen erwähnt werden und die Figuren Kettenrollen zeigen, gilt für alle Ausführungsbeispiele, dass an Stelle von Kettenrollen oder in Kombination mit diesen auch Gleitelemente als Eingriffsstellen und/oder Führungselemente an der Gelenkkette angeordnet sein können. Alle Ausführungsbeispiele lassen sich sowohl bei Fahrtreppen mit einem Stufenband als auch bei Fahrsteigen mit einem Palettenband einsetzen. Meistens weisen Stufenbänder und Palettenbänder zwei parallel zueinander angeordnete, umlaufende Gelenkketten auf, welche quer zur Laufrichtung durch die daran angeordneten Stufen beziehungsweise Paletten miteinander verbunden sind. In den Umlenkbereichen sind entsprechend den beschriebenen Ausführungsbeispielen sinnvollerweise für jede der beiden Gelenkketten Förderkettenräder beziehungsweise Umlenkkettenräder vorzusehen. Da ein Umlenkkettenrad kein Drehmoment übertragen muss, kann es auch durch eine Umlenkkurve beziehungsweise durch einen Umlenkbogen oder Spannbogen ersetzt werden. Ausführungen, die nur erfindungsgemäß ausgestaltete Förderkettenräder umfassen und im ersten Umlenkbereich Umlenkkurven beziehungsweise Umlenkschienen beziehungsweise Umlenkführungen aufweisen, sind ebenfalls Teil der vorliegenden Erfindung.

Die vorliegende Erfindung lehrt grundsätzlich, dass sehr breite Zähne durch die Anordnung weiterer Zahnlücken unterteilt werden können und dadurch die Lebensdauer der Umlenkkettenräder und Förderkettenräder auf einfache und kostengünstige Weise erhöht werden kann. Sofern die Eingriffsabstände der Gelenkkette lang genug sind, können selbstverständlich auch mehr als eine Zahnlücke zwischen zwei aufeinander folgende Eingriffsabständen am Förderkettenrad oder Umlenkkettenrad vorgesehen sein, so dass die Lebensdauer nicht nur verdoppelt, sondern entsprechend einer Vervielfachung der Zähnezahl auch eine Vervielfachung der Lebensdauer erreicht werden kann. Solche Ausführungen sind Äquivalente im Sinne der Erfindung.

## Patentansprüche

1. Fahrtreppe (1) mit einem Stufenband (7) oder Fahrsteig mit einem Palettenband (107), wobei das Stufenband (7) oder Palettenband (107) mindestens eine Gelenkkette (8, 108, 208, 408) aufweist, die in theoretisch gleichen Eingriffsabständen (E) aufeinanderfolgend angeordnete Eingriffsstellen (27, 127, 227, 327A, 327B, 427) beinhaltet und an welcher Gelenkkette (8, 108, 208, 408) Stufen (9) beziehungsweise Paletten (109) angeordnet sind, wobei die Fahrtreppe (1) oder der Fahrsteig einen ersten Umlenkbereich (5) und einen zweiten Umlenkbereich (6) mit mindestens einem Förderkettenrad (14, 114, 214, 314A, 314B) aufweist, die mindestens eine Gelenkkette (8, 108, 208, 408) zwischen den Umlenkbereichen (5, 6) umlaufend angeordnet ist und die Eingriffsstellen (27, 127, 227, 327A, 327B, 427) in Zahnlücken (22, 122, 222, 422) des Förderkettenrades (14, 114, 214, 314A, 314B) und gegebenenfalls in Zahnlücken (22, 122, 222, 422) mindestens eines im ersten Umlenkbereich (5) angeordneten Umlenkkettenrades eingreifen, **dadurch gekennzeichnet, dass** das mindestens eine Förderkettenrad (14, 114, 214, 314A, 314B) und/oder das mindestens eine Umlenkkettenrad einen Teilkreis (23) mit einer auf die Zahnlücken (22, 122, 222, 422) bezogene Teilung (T) aufweist, die der Hälfte eines Eingriffsabstandes (E) der Gelenkkette (8, 108, 208, 408) entspricht.

2. Fahrtreppe (1) oder Fahrsteig nach Anspruch 1, wobei das mindestens eine Förderkettenrad (14, 114, 214, 314A, 314B) und/oder Umlenkkettenrad eine ungerade Zähnezahl aufweist.

3. Fahrtreppe (1) oder Fahrsteig nach Anspruch 1 oder 2, wobei die mindestens eine Gelenkkette (8, 108, 208, 408) Kettenrollen (27, 127, 227, 327A, 327B, 427A, 427B) beinhaltet die an Gelenkstellen (26, 126) der Gelenkkette (8, 108, 208, 408) angeordnet sind, welche Kettenrollen (27, 127, 227, 327A, 327B, 427A, 427B) die Eingriffsstellen (27, 127, 227, 327A, 327B, 427) bilden und welche Kettenrollen (27, 127, 227, 327A, 327B, 427A, 427B) eine bestimmte Kettenrollenbreite aufweisen.

4. Fahrtreppe (1) oder Fahrsteig nach Anspruch 3, wobei die Kettenrollen (427A, 427B) der mindestens einen Gelenkkette (408) in erste Kettenrollen (427A) und zweite Kettenrollen (427B) aufgeteilt sind und die ersten Kettenrollen (427A) zu den zweiten Kettenrollen (427B) in alternierender Abfolge versetzt an der Gelenkkette (408) angeordnet sind, so dass die ersten Kettenrollen (427A) und die zweiten Kettenrollen (427B) auf nebeneinanderliegenden Spuren (433, 434) abrollen.

5. Fahrtreppe (1) oder Fahrsteig nach Anspruch 4, wobei die ersten Kettenrollen (427A) über das Förderkettenrad (423) und gegebenenfalls über das Umlenkkettenrad geführt sind und die zweiten Kettenrollen (427B) über eine zum Förderkettenrad (423) beziehungsweise Umlenkkettenrad ausgerichtete Umlenkkurve (436) geführt sind.

6. Fahrtreppe (1) oder Fahrsteig nach Anspruch 5, wobei im jeweiligen Umlenkbereich (5, 6) die Kettenrollen (427A, 427B) an einem Grundkreis (R_{G}) des Förderkettenrades (423) beziehungsweise des Umlenkkettenrades aufliegen und der Grundkreisradius (R_{G}) kleiner ist als ein Radius der Umlenkkurve (436).

7. Fahrtreppe (1) oder Fahrsteig nach Anspruch 4, wobei die ersten Kettenrollen (427A) über ein erstes Förderkettenrad (314A) geführt sind und die zweiten Kettenrollen (427B) über ein zum ersten Förderkettenrad (314A) parallel angeordnetes und mit diesem drehstarr verbundenes zweites Förderkettenrad (314B) geführt sind.

8. Fahrtreppe (1) oder Fahrsteig nach Anspruch 7, wobei ein erster Teilkreisdurchmesser (R1) des ersten Förderkettenrades (314A) grösser ist als ein zweiter Teilkreisdurchmesser (R2) des zweiten Förderkettenrades (314B).

9. Fahrtreppe (1) oder Fahrsteig nach Anspruch 3, wobei die Kettenrollen (127) der mindestens einen Gelenkkette (108) abgestuft ausgebildet sind und in einer ersten Hälfte ihrer Kettenrollenbreite einen ersten Rollendurchmesser (128) und in einer zweiten Hälfte ihrer Kettenrollenbreite einen zum ersten Rollendurchmesser (128) kleineren zweiten Rollendurchmesser (129) aufweisen und die Kettenrollen (127) bezogen auf ihre abgestufte Ausgestaltung alternierend zwischen Kettenlaschen (131) der Gelenkkette (108) angeordnet sind, so dass ein erster Teil der Kettenrollen (127) und ein zweiter Teil der Kettenrollen (127) mit ihren ersten Rollendurchmessern (128) auf nebeneinanderliegenden, parallelen ersten Spur (132) und zweiten Spur (133) abrollen.

10. Fahrtreppe (1) oder Fahrsteig nach Anspruch 9, wobei das Förderkettenrad (114) und sofern vorhanden, das Umlenkkettenrad einen Grundkreisradius (R_{G}) aufweisen, eine Breite des Förderkettenrades (114) und des Umlenkkettenrades der halben Kettenrollenbreite der abgestuften Kettenrollen (127) entspricht und diese Kettenräder (114) zur ersten Spur (132) ausgerichtet sind, und wobei jeweils eine zum Förderkettenrad (114) beziehungsweise Umlenkkettenrad und zur zweiten Spur (133) ausgerichtete Umlenkkurve (136) vorhanden ist, so dass in den Umlenkbereichen (5, 6) die ersten Rollendurchmesser (128) alternierend am Grundkreisradius (R_{G}) und an der Umlenkkurve (136) anliegen.

11. Fahrtreppe (1) oder Fahrsteig nach Anspruch 10, wobei das Förderkettenrad (114) und gegebenenfalls das Umlenkkettenrad einen Grundkreisradius (R_{G}) aufweisen, der kleiner ist als ein Radius der Umlenkkurve (136).

12. Fahrtreppe (1) oder Fahrsteig nach Anspruch 3, wobei die Kettenrollen (227) der mindestens einen Gelenkkette (208) abgestuft ausgebildet sind und in einer ersten Hälfte ihrer Kettenrollenbreite einen ersten Rollendurchmesser (228) und in einer zweiten Hälfte ihrer Kettenrollenbreite einen zum ersten Rollendurchmesser (228) kleineren zweiten Rollendurchmesser (229) aufweisen und die Kettenrollen (227) mit ihrer abgestuften Ausgestaltung alternierend zwischen Kettenlaschen (231, 231') der Gelenkkette (208) angeordnet sind, wobei ein erster Teil der (327A) Kettenrollen (227) und ein zweiter Teil (327B) der Kettenrollen (227) mit ihren ersten Rollendurchmessern (228) auf einer gemeinsamen, mittleren Spur (232) abrollen, der erste Teil (327A) der Kettenrollen (227) bezüglich ihres zweiten Durchmessers (229) zu einer parallel zur mittleren Spur (232) verlaufenden ersten Seitenspur (233) ausgerichtet sind und der zweite Teil (327A) der Kettenrollen (227) bezüglich ihres zweiten Durchmessers (229) zu einer parallel zur mittleren Spur (232) verlaufenden zweiten Seitenspur (234) ausgerichtet angeordnet sind.

13. Fahrtreppe (1) oder Fahrsteig nach Anspruch 12, wobei das Förderkettenrad (214, 314A, 314B) und gegebenenfalls das Umlenkkettenrad einen Grundkreisradius (R_{G}) aufweisen, die Breite des Förderkettenrades (214, 314A, 314B) beziehungsweise des Umlenkkettenrades der halben Kettenrollenbreite der abgestuften Kettenrollen (227) entspricht sowie zu einer der beiden Seitenspuren (233, 234) ausgerichtet angeordnet ist und jeweils eine zum Förderkettenrad (214, 314A, 314B) beziehungsweise Umlenkkettenrad und der mittleren Spur (232) ausgerichtete Umlenkkurve (236) vorhanden ist, so dass in den Umlenkbereichen (5, 6) die ersten Rollendurchmesser (228) an der Umlenkkurve (236) anliegen und die zweiten Durchmesser (229) einer der beiden Seitenspuren (233) am Grundkreisradius (R_{G}) anliegen.

14. Fahrtreppe (1) oder Fahrsteig nach Anspruch 12, wobei der erste Teil (327A) der Kettenrollen (227) mit ihren zweiten Durchmessern (229) über ein, zu einer der beiden Seitenspuren (233) ausgerichtetes erstes Förderkettenrad (314A) und sofern vorhanden, über ein erstes Umlenkkettenrad geführt sind und der zweite Teil (327B) der Kettenrollen (227) mit ihren zweiten Durchmessern (229) über ein zur zweiten Seitenspur (234) ausgerichtetes und zum ersten Förderkettenrad (314A) parallel angeordnetes und mit diesem drehstarr verbundenes zweites Förderkettenrad (314B) und ein zum ersten Umlenkkettenrad parallel angeordnetes und mit diesem drehstarr verbundenes zweites Umlenkkettenrad geführt sind, wobei die Kettenrollen (227) mit ihrem ersten Durchmesser (228) über eine zwischen den Förderkettenrädern (314A, 314B) beziehungsweise Umlenkkettenrädern angeordnete Umlenkkurve (236) abrollen.

15. Fahrtreppe (1) oder Fahrsteig nach Anspruch 14, wobei das erste Förderkettenrad (314A) beziehungsweise das erste Umlenkkettenrad einen ersten Teilkreisdurchmesser (R1) aufweisen der grösser ist, als ein zweiter Teilkreisdurchmesser (R2) des zweiten Förderkettenrades (314B) beziehungsweise des zweiten Umlenkkettenrades.

## Claims

1. Escalator (1) with a step belt (7) or moving walkway with a plate belt (107), wherein the step belt (7) or plate belt (107) comprises at least one link chain (8, 108, 208, 408), which contains engagement points (27, 127, 227, 327A, 327B, 427) arranged in succession at theoretically equal engagement spacings (E) and at which link chain (8, 108, 208, 408) steps (9) or plates (109) are arranged, wherein the escalator (1) or the moving walkway has a first deflecting region (5) and a second deflecting region (6) with at least one conveying chainwheel (14, 114, 214, 314A, 314B), the at least one link chain (8, 108, 208, 408) is arranged to circulate between the deflecting regions (5, 6) and the engagement points (27, 127, 227, 327A, 327B, 427) engage in tooth gaps (22, 122, 222, 422) of the conveying chainwheel (14, 114, 214, 314A, 314B) and in a given case in tooth gaps (22, 122, 222, 422) of at least one deflecting chainwheel arranged in the first deflecting region (5), **characterised in that** the at least one conveying chainwheel (14, 114, 214, 314A, 314B) and/or the at least one deflecting chainwheel has a pitch circle (23) with a pitch (T) which is referred to the tooth gaps (22, 122, 222, 422) and which corresponds with half an engagement spacing (E) of the link chain (8, 108, 208, 408).

2. Escalator (1) or moving walkway according to claim 1, wherein the at least one conveying chainwheel (14, 114, 214, 314A, 314B) and/or deflecting chainwheel has an uneven tooth number.

3. Escalator (1) or moving walkway according to claim 1 or 2, wherein the at least one link chain (8, 108, 208, 408) contains chain rollers (27, 127, 227, 327A, 327B, 427A, 427B) which are arranged at link locations (26, 126) of the link chain (8, 108, 208, 408), which chain rollers (27, 127, 227, 327A, 327B, 427A, 427B) form the engagement points (27, 127, 227, 327A, 327B, 427) and which chain rollers (27, 127, 227, 327A, 327B, 427A, 427B) have a defined chain roller width.

4. Escalator (1) or moving walkway according to claim 3, wherein the chain rollers (427A, 427B) of the at least one link chain (408) are divided into first chain rollers (427A) and second chain rollers (427B) and the first chain rollers (427A) are arranged at the link chain (408) to be offset relative to the second chain rollers (427B) in alternating sequence so that the first chain rollers (427A) and the second chain rollers (427B) roll on tracks (433, 434) adjacent to one another.

5. Escalator (1) or moving walkway according to claim 4, wherein the first chain rollers (427A) are guided by way of the conveying chainwheel (423) and in a given case by way of the deflecting chainwheel and the second chain rollers (427B) are guided by way of a deflecting curve (436) aligned with the conveying chainwheel (423) or deflecting chainwheel.

6. Escalator (1) or moving walkway according to claim 5, wherein in the respective deflecting region (5, 6) the chain rollers (427A, 427B) lie on a base circle (R_{G}) of the conveying chainwheel (423) or of the deflecting chainwheel and the base circle radius (R_{G}) is smaller than a radius of the deflecting curve (436).

7. Escalator (1) or moving walkway according to claim 4, wherein the first chain rollers (427A) are guided by way of a first conveying chainwheel (314A) and the second chain rollers (427B) are guided by way of a second conveying chainwheel (314B) which is arranged parallel to the first conveying chainwheel (314A) and connected therewith to be secure against relative rotation.

8. Escalator (1) or moving walkway according to claim 7, wherein a first pitch circle diameter (R1) of the first conveying chainwheel (314A) is larger than a second pitch circle diameter (R2) of the second conveying chainwheel (314B).

9. Escalator (1) or moving walkway according to claim 3, wherein the chain rollers (127) of the at least one link chain (108) are formed to be stepped and have a first roller diameter (128) in a first half of their chain roller width and a second roller diameter (129), which is smaller with respect to the first roller diameter (128), in a second half of their chain roller width and the chain rollers (127) are arranged in alternation, referred to the stepped form thereof, between chain straps (131) of the link chain (108) so that a first part of the chain rollers (127) and a second part of the chain rollers (127) roll by the first roller diameters (128) thereof on a parallel first track (132) and second track (133) adjacent to one another.

10. Escalator (1) or moving walkway according to claim 9, wherein the conveying chainwheel (114) and, if present, the deflecting chainwheel have a base circle radius (R_{G}), a width of the conveying chainwheel (114) and of the deflecting chainwheel corresponds with half the chain roller width of the stepped chain rollers (127) and these chainwheels (114) are aligned with the first track (132), and wherein a respective deflecting curve (136) aligned with the conveying chainwheel (114) or deflecting chainwheel and with the second track (133) is present so that in the deflecting regions (5, 6) the first roller diameter (128) lies in alternation at the base circle radius (R_{G}) and at the deflecting curve (136).

11. Escalator (1) or moving walkway according to claim 10, wherein the conveying chainwheel (114) and in a given case the deflecting chainwheel have a base circle radius (R_{G}) which is smaller than a radius of the deflecting curve (136).

12. Escalator (1) or moving walkway according to claim 3, wherein the chain rollers (227) of the at least one link chain (208) are formed to be stepped and have a first roller diameter (228) in a first half of their chain roller width and a second roller diameter (229), which is smaller with respect to the first roller diameter (228), in a second half of their chain roller width and the chain rollers (227) are arranged with the stepped form thereof alternating between chain straps (231, 231') of the link chain (208), wherein a first part (327A) of the chain rollers (227) and a second part (327B) of the chain rollers (227) roll by the first roller diameters (228) thereof on a common, centre track (232), the first part (327A) of the chain rollers (227) is aligned with respect to the second diameter (229) thereof with a first side track (233) extending parallel to the centre track (232) and the second part (327A) of the chain rollers (227) is arranged to be aligned with respect to the second diameter (229) thereof with a second side track (234) extending parallel to the centre track (232).

13. Escalator (1) or moving walkway according to claim 12, wherein the conveying chainwheel (214, 314A, 314B) and in a given case the deflecting chainwheel have a base circle radius (R_{G}), the width of the conveying chainwheel (214, 314A, 314B) or of the deflecting chainwheel corresponds with half the chain roller width of the stepped chain rollers (227) as well as is arranged to be aligned with one of the two side tracks (233, 234), and a respective deflecting curve (236) aligned with the conveying chainwheel (214, 314A, 314B) or deflecting chainwheel and the centre track (232) is present so that in the deflecting regions (5, 6) the first roller diameters (228) lie at the deflecting curve (236) and the second diameters (229) lie at one of the two side tracks (233) at the base circle radius (R_{G}).

14. Escalator (1) or moving walkway according to claim 12, wherein the first part (327A) of the chain rollers (227) is guided by the second diameters (229) thereof by way of a first conveying chainwheel (314A) aligned with one of the two side tracks (233) and, if present, by way of a first deflecting chainwheel and the second part (327B) of the chain rollers (227) is guided by the second diameters (229) thereof by way of a second conveying chainwheel (314B), which is aligned with the second side track (234) and which is arranged parallel to the first conveying chainwheel (314A) and connected therewith to be secure against relative rotation, and a second deflecting chainwheel, which is arranged parallel to the first deflecting chainwheel and connected therewith to be secure against relative rotation, wherein the chain rollers (227) roll by the first diameter (228) thereof over a deflecting curve (236) arranged between the conveying chainwheels (314A, 314B) or deflecting chainwheels.

15. Escalator (1) or moving walkway according to claim 14, wherein the first conveying chainwheel (314A) or the first deflecting chainwheel has a first pitch circle diameter (R1) which is larger than a second pitch circle diameter (R2) of the second conveying chainwheel (314B) or of the second deflecting chainwheel.

## Revendications

1. Escalier roulant (1) avec une bande de marches (7) ou trottoir roulant avec une bande de palettes (107), dans lequel la bande de marches (7) ou bande de palettes (107) présente au moins une chaîne articulée (8, 108, 208, 408), qui comporte des points d'engagement (27, 127, 227, 327A, 327B, 427) agencés l'un après l'autre à des distances d'engagement (E) théoriquement identiques et au niveau de laquelle chaîne articulée (8, 108, 208, 408), respectivement des marches (9) ou des palettes (109) sont agencées, dans lequel l'escalier roulant (1) ou le trottoir roulant présente une première zone de déviation (5) et une deuxième zone de déviation (6) avec au moins une roue de chaîne de transport (14, 114, 214, 314A, 314B), l'au moins une chaîne articulée (8, 108, 208, 408) est agencée de manière périphérique entre les zones de déviation (5, 6) et les points d'engagement (27, 127, 227, 327A, 327B, 427) s'engagent dans des entredents (22, 122, 222, 422) de la roue de chaîne de transport (14, 114, 214, 314A, 314B) et le cas échéant dans des entredents (22, 122, 222, 422) d'au moins une roue d'entraînement de déviation agencée dans la première zone de déviation (5), **caractérisé en ce que** l'au moins une roue de chaîne de transport (14, 114, 214, 314A, 314B) et/ou l'au moins une roue d'entraînement de déviation présente(nt) un cercle primitif (23) avec un pas (T) se rapportant aux entredents (22, 122, 222, 422) qui correspond à la moitié d'une distance d'engagement (E) de la chaîne articulée (8, 108, 208, 408).

2. Escalier roulant (1) ou trottoir roulant selon la revendication 1, dans lequel l'au moins une roue de chaîne de transport (14, 114, 214, 314A, 314B) et/ou roue d'entraînement de déviation présente(nt) un nombre de dents impair.

3. Escalier roulant (1) ou trottoir roulant selon la revendication 1 ou 2, dans lequel l'au moins une chaîne articulée (8, 108, 208, 408) comporte des rouleaux de chaîne (27, 127, 227, 327A, 327B, 427A, 427B) qui sont agencés aux points d'articulation (26, 126) de la chaîne articulée (8, 108, 208, 408), lesquels rouleaux de chaîne (27, 127, 227, 327A, 327B, 427A, 427B) forment les points d'engagement (27, 127, 227, 327A, 327B, 427) et lesquels rouleaux de chaîne (27, 127, 227, 327A, 327B, 427A, 427B) présentent une largeur de rouleau de chaîne définie.

4. Escalier roulant (1) ou trottoir roulant selon la revendication 3, dans lequel les rouleaux de chaîne (427A, 427B) de l'au moins une chaîne articulée (408) sont répartis en premiers rouleaux de chaîne (427A) et deuxièmes rouleaux de chaîne (427B) et les premiers rouleaux de chaîne (427A) sont agencés au niveau de la chaîne articulée (408) de manière décalée en alternance par rapport aux deuxièmes rouleaux de chaîne (427B), de sorte que les premiers rouleaux de chaîne (427A) et les deuxièmes rouleaux de chaîne (427B) déroulent sur des voies juxtaposées (433, 434).

5. Escalier roulant (1) ou trottoir roulant selon la revendication 4, dans lequel les premiers rouleaux de chaîne (427A) sont guidés par le biais de la roue de chaîne de transport (423) et le cas échéant par le biais de la roue d'entraînement de déviation et les deuxièmes rouleaux de chaîne (427B) sont guidés par le biais d'une courbe de déviation (436) orientée par rapport à la roue de chaîne de transport (423) ou roue d'entraînement de déviation.

6. Escalier roulant (1) ou trottoir roulant selon la revendication 5, dans lequel dans la zone de déviation (5, 6) concernée, les rouleaux de chaîne (427A, 427B) s'appuient sur un cercle de base (R_{G}) de la roue de chaîne de transport (423) ou de la roue d'entraînement de déviation et le rayon du cercle de base (R_{G}) est inférieur au rayon de la courbe de déviation (436).

7. Escalier roulant (1) ou trottoir roulant selon la revendication 4, dans lequel les premiers rouleaux de chaîne (427A) sont guidés par le biais d'une première roue de chaîne de transport (314A) et les deuxièmes rouleaux de chaîne (427B) sont guidés par le biais d'une deuxième roue de chaîne de transport (314B) agencée parallèlement à la première roue de chaîne de transport (314A) et reliée à celle-ci de manière fixe en rotation.

8. Escalier roulant (1) ou trottoir roulant selon la revendication 7, dans lequel un premier diamètre de cercle primitif (R1) de la première roue de chaîne de transport (314A) est supérieur à un deuxième diamètre de cercle primitif (R2) de la deuxième roue de chaîne de transport (314B).

9. Escalier roulant (1) ou trottoir roulant selon la revendication 3, dans lequel les rouleaux de chaîne (127) de l'au moins une chaîne articulée (108) sont réalisés de manière étagée et présentent dans une première moitié de leur largeur de rouleau de chaîne un premier diamètre de rouleau (128) et dans une deuxième moitié de leur largeur de rouleau de chaîne un deuxième diamètre de rouleau (129) inférieur au premier diamètre de rouleau (128) et les rouleaux de chaîne (127) sont agencés par rapport à leur configuration étagée en alternance entre des éclisses de chaîne (131) de la chaîne articulée (108), de sorte qu'une première partie des rouleaux de chaîne (127) et une deuxième partie des rouleaux de chaîne (127) déroulent avec leurs premiers diamètres de rouleau (128) sur une première voie (132) et une deuxième voie (133) parallèles, juxtaposées.

10. Escalier roulant (1) ou trottoir roulant selon la revendication 9, dans lequel la roue de chaîne de transport (114) et, le cas échéant, la roue d'entraînement de déviation, présente(nt) un rayon de cercle de base (R_{G}), une largeur de la roue de chaîne de transport (114) et de la roue d'entraînement de déviation correspond à la moitié de la largeur de rouleau de chaîne des rouleaux de chaîne étagés (127) et ces roues de chaîne (114) sont orientées par rapport à la première voie (132), et dans lequel respectivement une courbe de déviation (136) orientée par rapport à la roue de chaîne de transport (114) ou à la roue d'entraînement de déviation et par rapport à la deuxième voie (133) est présente, de sorte que dans les zones de déviation (5, 6), les premiers diamètres de rouleau (128) s'appuient en alternance sur le rayon de cercle de base (R_{G}) et sur la courbe de déviation (136).

11. Escalier roulant (1) ou trottoir roulant selon la revendication 10, dans lequel la roue de chaîne de transport (114) et, le cas échéant, la roue d'entraînement de déviation, présente(nt) un rayon de cercle de base (R_{G}), qui est inférieur à un rayon de la courbe de déviation (136).

12. Escalier roulant (1) ou trottoir roulant selon la revendication 3, dans lequel les rouleaux de chaîne (227) de l'au moins une chaîne articulée (208) sont réalisés de manière étagée et présentent dans une première moitié de leur largeur de rouleau de chaîne un premier diamètre de rouleau (228) et dans une deuxième moitié de leur largeur de rouleau de chaîne un deuxième diamètre de rouleau (229) inférieur au premier diamètre de rouleau (228) et les rouleaux de chaîne (227) avec leur configuration étagée sont agencés en alternance entre des éclisses de chaîne (231, 231') de la chaîne articulée (208), dans lequel une première partie (327A) des rouleaux de chaîne (227) et une deuxième partie (327B) des rouleaux de chaîne (227) déroulent avec leurs premiers diamètres de rouleau (228) sur une voie médiane commune (232), la première partie (327A) des rouleaux de chaîne (227) est orientée par rapport à leur deuxième diamètre (229) par rapport à une première voie latérale (233) s'étendant parallèlement à la voie médiane (232) et la deuxième partie (327A) des rouleaux de chaîne (227) est orientée par rapport à leur deuxième diamètre (229) par rapport à une deuxième voie latérale (234) s'étendant parallèlement à la voie médiane (232).

13. Escalier roulant (1) ou trottoir roulant selon la revendication 12, dans lequel la roue de chaîne de transport (214, 314A, 314B) et, le cas échéant, la roue d'entraînement de déviation, présente(nt) un rayon de cercle de base (R_{G}), la largeur de la roue de chaîne de transport (214, 314A, 314B) ou de la roue d'entraînement de déviation correspond à la moitié de la largeur de rouleau de chaîne des rouleaux de chaîne étagés (227) et est orientée par rapport à une des deux voies latérales (233, 234) et respectivement une courbe de déviation (236) orientée par rapport à la roue de chaîne de transport (214, 314A, 314B) ou à la roue d'entraînement de déviation et à la deuxième voie (232) est présente, de sorte que dans les zones de déviation (5, 6), les premiers diamètres de rouleau (228) s'appuient sur la courbe de déviation (236) et les deuxièmes diamètres (229) d'une des deux voies latérales (233) s'appuient sur le rayon de cercle de base (R_{G}).

14. Escalier roulant (1) ou trottoir roulant selon la revendication 12, dans lequel la première partie (327A) des rouleaux de chaîne (227) est guidée avec leurs deuxièmes diamètres (229) par le biais d'une première roue de chaîne de transport (314A) orientée par rapport à une des deux voies latérales (233) et, le cas échéant, par le biais d'une première roue d'entraînement de déviation, et la deuxième partie (327B) des rouleaux de chaîne (227) est guidée avec leurs deuxièmes diamètres (229) par le biais d'une deuxième roue de chaîne de transport (314B) orientée par rapport à la deuxième voie latérale (234) et agencée parallèlement à la première roue de chaîne de transport (314A) et reliée à celle-ci de manière fixe en rotation et d'une deuxième roue d'entraînement de déviation agencée parallèlement à la première roue d'entraînement de déviation et reliée à celle-ci de manière fixe en rotation, dans lequel les rouleaux de chaîne (227) déroulent avec leur premier diamètre (228) par le biais d'une courbe de déviation (236) agencée entre les roues de chaîne de transport (314A, 314B) ou roues d'entraînement de déviation.

15. Escalier roulant (1) ou trottoir roulant selon la revendication 14, dans lequel la première roue de chaîne de transport (314A) ou la première roue d'entraînement de déviation présente un premier diamètre de cercle primitif (R1) qui est supérieur à un deuxième diamètre de cercle primitif (R2) de la deuxième roue de chaîne de transport (314B) respectivement de la deuxième roue d'entraînement de déviation.
